# EUROPEAN PATENT SPECIFICATION

(11) **EP 1 760 813 B1**
(45) Date of publication and mention of the grant of the patent: **21.07.2010**
(21) Application number: 06119820.6
(22) Date of filing: 30.08.2006
(51) Int. Cl.: H01M 8/02

(54) **Bipolar plate**
Bipolarplatte
Plaque bipolaire

(30) Priority: 31.08.2005 KR 20050080992
(43) Date of publication of application: 07.03.2007
(73) Proprietor: Samsung SDI Co., Ltd., Gyeonggi-do (KR)
(72) Inventor: Suh, Jun Won, 428-5 Gongse-ri Kiheung-eup Gyeonggi-do (KR)
(74) Representative: Walaski, Jan Filip

(56) References cited:
- WO-A-02/092659
- WO-A-2004/081071
- WO-A2-02/27815
- US-A1- 2002 034 672
- US-A1- 2003 157 397
- US-A1- 2003 194 594
- US-A1- 2003 211 380
- US-B1- 6 242 124

## Description

The present invention relates to a bipolar plate and to a unit cell and a fuel cell system including the bipolar plate for generate electrical energy by an electrochemical reaction between hydrogen and oxygen. More particularly, the invention relates to a bipolar plate having one surface facing an anode electrode being treated to have hydrophobicity and another surface facing a cathode electrode being treated to have hydrophilicity.

In general, a fuel cell system is a power generator that transforms chemical reaction between hydrogen and oxygen into electric energy. The fuel cell system has been researched and developed as an alternative power source to satisfy an increased demand for power and to solve environmental problems. Here, hydrogen is extracted from a hydrogen containing fuel that includes an alcoholic fuel such as methanol, ethanol, etc.; a hydro-carbonaceous fuel such as methane, propane, butane, etc.; or a natural gas fuel such as liquefied natural gas, etc.

The fuel cell system is classified into a phosphoric acid fuel cell (PAFC), a molten carbon fuel cell (MCFC), a solid oxide fuel cell (SOFC), a polymer electrolyte membrane fuel cell (PEMFC), an alkaline fuel cell (AFC), a direct methanol fuel cell (DMFC), etc. according to kinds of fuel. Furthermore, the fuel cell system can be applied to various fields such as a mobile device, transportation, a distributed power source, etc. according to kinds of fuel, a driving temperature, an output range, etc.

Among various fuel cell systems, the PEMFC and the DMFC have been widely researched for the mobile device. Each of such fuel cell systems basically includes a stack in which unit cells are stacked to generate electricity. The stack has a structure that a plurality of unit cells stacked between end plates are fastened by bolts and nuts. The unit cell includes a membrane electrode assembly (MEA) having an electrolyte membrane between an anode electrode and a cathode electrode; and separators (e.g., bipolar plates) placed on opposite sides of the electrolyte membrane and formed with channels for fluid.

The bipolar plates supply the anode electrode and the cathode electrode with hydrogen containing fuel and an oxidant, respectively. Furthermore, the bipolar plates discharge carbon dioxide and water from the anode electrode and the cathode electrode to the outside, respectively.

If water and carbon dioxide are not smoothly discharged, the power generation efficiency of the fuel cell system is decreased. However, the discharging function of the bipolar plates has not been actively researched.

Accordingly, one aim of the present invention is to provide bipolar plates having surfaces treated to respectively effectively discharge carbon dioxide and water from an anode electrode and a cathode electrode, a unit cell including the bipolar plates, and a fuel cell system having the bipolar plates.

WO02/27815 discloses a polarized gas separator and liquid coalescer for fuel cell stack assemblies.

According to the invention, there is provided a unit cell according to claim 1.

According to the present invention, there is provided a bipolar plate including: at least two channels respectively arranged in first and second opposite surfaces of the bipolar plate, the at least two channels adapted to allow respective fluids to flow therethrough; the first surface of the opposite surfaces of the bipolar plate has hydrophobicity and the second surface of the opposite surfaces of the bipolar plate has hydrophilicity.

The first surface of the opposite surfaces of the bipolar plate has a coating of a hydrophobic material, and the second surface of the opposite surfaces of the bipolar plate has a coating of a hydrophilic material. The hydrophobic material includes either a phenol or epoxy compound, and the hydrophilic material includes an acrylic compound.

According to the present invention there is also provided a unit cell including: a membrane electrode assembly including a polymer membrane, and anode and cathode electrodes arranged in opposite sides of the polymer membrane; and a bipolar plate including a first surface facing the anode electrode and having hydrophobicity, and a second surface facing the cathode electrode and having hydrophilicity.

The first surface of the bipolar plate preferably has a coating of a hydrophobic material, and the second surface preferably has a coating of a hydrophilic material. The hydrophobic material preferably includes either a phenol or epoxy compound, and the hydrophilic material preferably includes an acrylic compound.

The first surface of the bipolar plate preferably includes a fuel supplying channel adapted to supply a hydrogen containing fuel to the anode electrode, and the second surface of the bipolar plate preferably includes an oxygen supplying channel adapted to supply oxygen to the cathode electrode. According to the present invention there is further provided a fuel cell system including: a stack having an electric generator adapted to generate electricity by a chemical reaction between hydrogen and oxygen; a fuel feeder adapted to supply the stack with a hydrogen containing fuel; and an oxygen feeder adapted to supply the stack with oxygen; the electric generator includes a bipolar plate having first and second opposite surfaces having respective fluid flow channels, the first surface of the opposite surfaces having hydrophobicity and the second surface of the opposite surfaces having hydrophilicity. The fluid flow channels respectively preferably include a fuel supplying channel adapted to supply a hydrogen containing fuel, and an oxygen supplying channel adapted to supply oxygen. The first surface including the fuel supplying channel preferably has hydrophobicity, and the second surface having the oxygen supplying channel preferably has hydrophilicity. The first surface preferably has a coating of a hydrophobic material, and the second surface preferably has a coating of a hydrophilic material. The hydrophobic material preferably includes either a phenol or epoxy compound, and the hydrophilic material preferably includes an acrylic compound.

The electric generator preferably includes a membrane electrode assembly including a polymer membrane and anode and cathode electrodes arranged in opposite sides of the polymer membrane.

The anode electrode preferably faces the first surface of the bipolar plate, and the cathode electrode preferably faces the second surface of the bipolar plate.

According to the present invention there is still further provided a bipolar plate including: at least two channels respectively arranged in first and second opposite surfaces of the bipolar plate, the at least two channels adapted to allow respective fluids to flow therethrough; the first and second opposite surfaces respectively have different contact angles between a liquid surface and a solid surface.

One contact angle is preferably in a range of 60° to 135° on one of the first and second opposite surfaces and other contact angle is preferably less than 60° on the other of the first and second opposite surfaces.

One of the first and second opposite surfaces preferably includes a fuel supplying channel adapted to supply a hydrogen containing fuel and the other of the first and second opposite surfaces preferably includes an oxygen supplying channel adapted to supply oxygen.

A more complete appreciation of the present invention, and many of the attendant advantages thereof, will be readily apparent as the present invention becomes better understood by reference to the following detailed description when considered in conjunction with the accompanying drawings in which like reference symbols indicate the same or similar components, wherein:
FIG. 1 is a schematic view of a fuel cell system with a stack according to an embodiment of the present invention;
FIG. 2 is a schematic view of the stack according to an embodiment of the present invention;
FIG. 3 is a sectional view partially showing a bipolar plate according to an embodiment of the present invention;
FIG. 4 is a sectional view partially showing a unit cell including the bipolar plates and a membrane-electrode assembly; and
FIG. 5 illustrates the concepts of hydrophilicity and hydrophobicity.

Hereinafter, exemplary embodiments of the present invention are described with reference to the accompanying drawings.

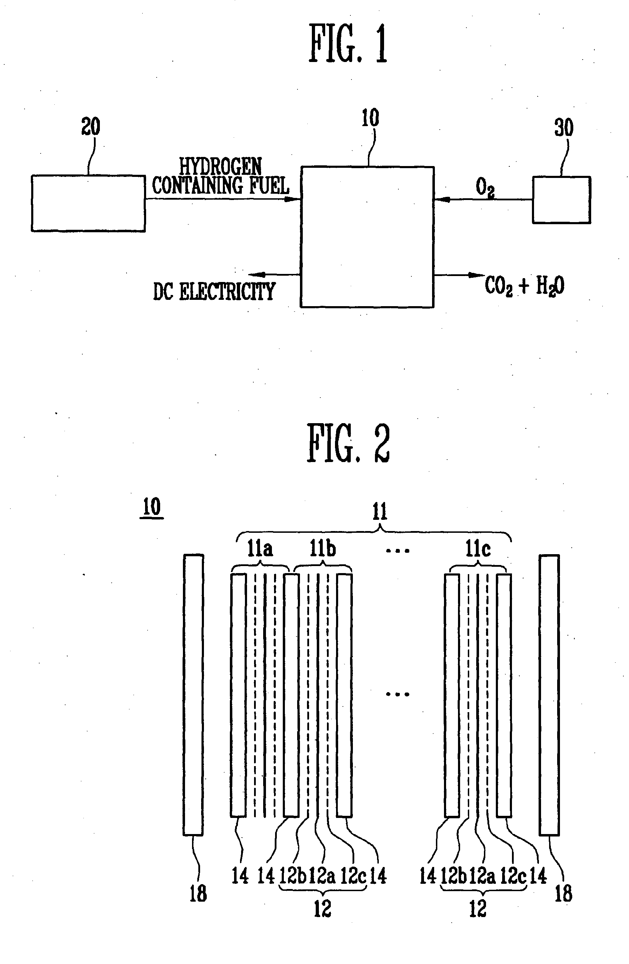

Referring to FIG. 1, a fuel cell system according to an embodiment of the present invention includes a stack 10 in which one and more unit cells are stacked, a fuel feeder 20 to supply the stack 10 with a hydrogen containing fuel, and an oxygen feeder 30 to supply the stack 10 with oxygen.

The hydrogen containing fuel includes raw fuel or hydrogen, for example, an alcohol fuel, such as methanol, ethanol, etc.; a hydro-carbonaceous fuel, such as methane, propane, butane, etc.; or a natural gas fuel, such as liquefied natural gas, etc. Preferably, hydrogen can be obtained by reforming the raw fuel. Therefore, the fuel feeder 20 can include only a fuel storage (not shown) to store the raw fuel including an alcohol fuel, such as methanol, ethanol, etc.; a hydro-carbonaceous fuel, such as methane, propane, butane, etc.; or a natural gas fuel, such as liquefied natural gas, etc., or can include a reformer (not shown) to reform the raw fuel into hydrogen in addition to the fuel storage.

Referring to FIG. 2, the stack 10 includes a Membrane Electrode Assembly (MEA) 12 having a polymer membrane 12a, and anode and cathode electrodes 12b and 12c provided on opposite sides of the polymer membrane 12a. In the MEA 12, the electrodes are formed by applying a catalyst material onto a porous support such as a carbon paper, and include the anode electrode 12b and the cathode electrode 12c. In the anode electrode 12b, hydrogen gas contained in the hydrogen containing fuel is oxidized to generate hydrogen ions (H⁺) and electrons (e⁻), and carbon dioxide is produced as a byproduct of the oxidization and discharged to the outside. In the cathode electrode 12c, the hydrogen ions transferred from the anode electrode 12b through the polymer membrane 12a is chemically reacted with oxygen supplied from the oxygen feeder 30, and water produced by this chemical reaction is discharged to the outside.

Furthermore, the stack 10 includes bipolar plates 14, interposed between adjacent membrane electrode assemblies 12, to respectively supply the anode and cathode electrodes 12b and 12c with hydrogen and oxygen. The stack 10 includes a plurality of unit cells 11a ~ 11n each including its respective membrane electrode assembly 12 and bipolar plates 14 arranged on opposite sides of the membrane electrode assembly 12.

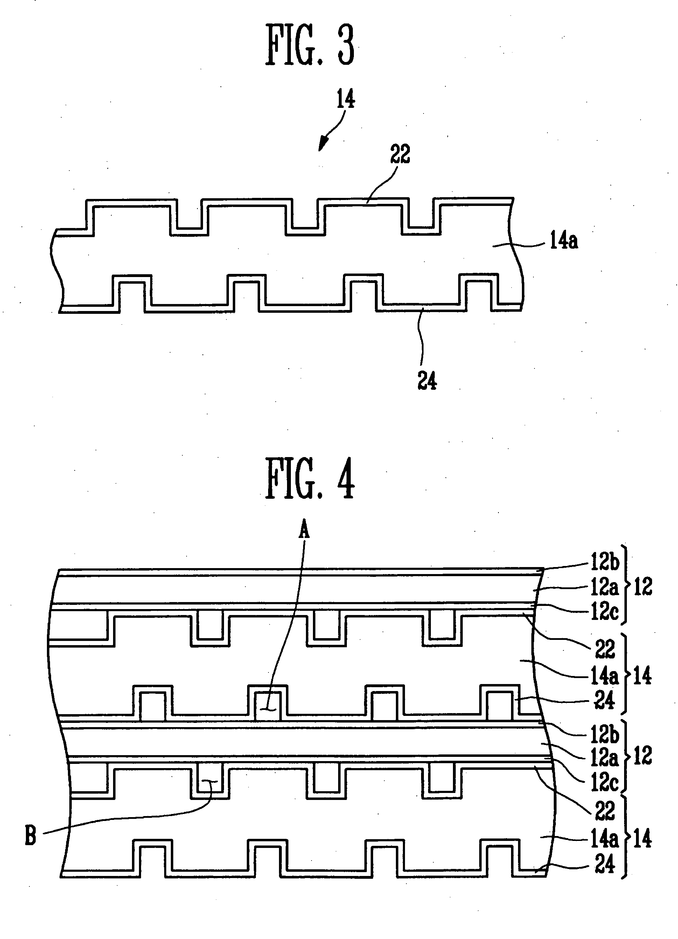

In the bipolar plates 14 interposed between the adjacent membrane electrode assemblies 12, as shown in FIGS. 3 and 4, a plate main body 14a has a first surface formed with a fuel supplying channel A to supply the hydrogen containing fuel, and a second surface formed with an oxygen supplying channel B to supply oxygen.

According to an embodiment of the present invention, the bipolar plate 14 has one surface, i.e., a hydrophobic surface 24 treated to have hydrophobicity. For example, the hydrophobic surface 24 is formed by being coated with a material having hydrophobicity, such as a phenol or epoxy compound. On the other hand, the bipolar plate 14 has the other surface, i.e., a hydrophilic surface 22 treated to have hydrophilicity. For example, the hydrophilic surface 22 is formed by being coated with a material having hydrophilicity, such as an acrylic compound. However, the surface treatments are not limited to the foregoing descriptions.

The hydrophobic surface 24 is also prepared interior of the fuel supplying channel A formed on the first surface of the plate main body 14a and the hydrophilic surface 22 is also prepared interior of the oxygen supplying channel B formed on the second surface of the plate main body 14a.

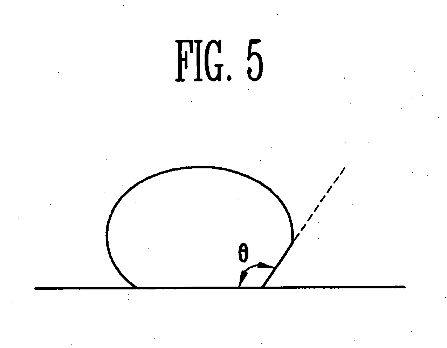

The hydrophobicity is a characteristic tending not to combine with liquid, but the hydrophilicity is a characteristic having an affinity for liquid. In general, when liquid is thermodynamically balanced on a solid surface, a predetermined angle is formed between the liquid surface and the solid surface as shown in FIG. 5, which will be called a contact angle (θ). In this embodiment, hydrophobicity means that the contact angle (θ) is maintained in a range from about 60° to about 135°. On the other hand, hydrophilicity means that the contact angle (θ) is maintained to be less than about 60°.

In result, the hydrogen containing fuel, particularly methanol, can be smoothly transferred from one surface of the bipolar plate 14 to the anode electrode 12b in the fuel supplying channel A having the hydrophobic surface 24, and water can be smoothly transferred from the cathode electrode 12c to the other surface of the bipolar plate 14 in the oxygen supplying channel B having the hydrophilic surface 22.

Referring to FIG. 4, the external surfaces of the anode and cathode electrodes 12b and 12c face the bipolar plates 14 to respectively supply the hydrogen containing fuel and oxygen. The plate main body 14a has the first surface facing the anode electrode 12b and formed with the fuel supplying channel A through which the hydrogen containing fuel flows, and the second surface facing the cathode electrode 12c and formed with the oxygen supplying channel B into which oxygen in air is introduced.

The anode electrode 12b facing the first surface of the plate main body 14a includes a catalyst layer to facilitate changing the hydrogen containing fuel supplied through the fuel supplying channel A formed in the first surface into the hydrogen ions and the electrons, and a Gas Diffusion Layer (GDL) to uniformly diffuse the hydrogen containing fuel to the catalyst layer and to discharge carbon dioxide to the outside. Likewise, the cathode electrode 12c facing the second surface of the plate main body 14a includes a catalyst layer to facilitate a chemical reaction between the hydrogen ions and oxygen supplied through the oxygen supplying channel B formed in the second surface, and a gas diffusion layer to uniformly diffuse oxygen to the catalyst layer and to discharge water produced due to the chemical reaction to the outside.

Since the first surface of the plate main body 14a has the hydrophobic surface 24, the hydrogen containing fuel in the fuel supplying channel A can be smoothly supplied to the gas diffusion layer of the anode electrode 12b, so that carbon dioxide produced as a byproduct in the anode electrode 12b can be easily discharged through the fuel supplying channel A. On the other hand, the second surface of the plate main body 13a has the hydrophilic surface 22, so that water produced as a byproduct in the cathode electrode 12c can be easily transferred from the cathode electrode 12c to the second surface of the plate main body 14a and discharged to the outside.

The polymer membrane 12a is a conductive polymer electrolyte membrane that has not only an ion exchange function to transfer the hydrogen ions generated in the catalyst layer of the anode electrode 12b to the catalyst layer of the cathode electrode 12c but also a function to prevent the hydrogen containing fuel from passing therethrough. Preferably, the polymer membrane 12a has a thickness of about 50µm through 200µm. Furthermore, the polymer membrane 12a includes a perfluorosulfonate resin film made of a perfluorosulfonate resin (Nafion), a film having a porous polytetrafluoroethylene thin film support coated with perfluorinated sulfonic acid or the like resin solution, a film having a porous nonconductive polymer support coated with positive ion exchange resin and inorganic silicate, etc.

In the stack 10, a part in which the plurality of unit cells 11a through 11n is stacked will be called the electric generator 11 for convenience. The stack 10 includes end plates 18 provided on opposite sides of the electric generator 11. The end plate 18 placed in one side of the stack 10 includes a fuel inlet in which the hydrogen containing fuel is introduced, and an output terminal to supply Direct Current (DC) electricity generated by the unit cells 11 a through 11n of the stack 10 to the outside. On the other hand, the end plate 18 placed on the other side of the stack 10 includes an air inlet in which air is introduced, and a discharging part to discharge carbon dioxide (CO₂) and water (H₂O to the outside.

The outmost bipolar plate 14 of the electric generator 11 faces and is electrically connected to the end plate 18. Furthermore, the supplying channel is provided on the surface opposite to the surface of the bipolar plate 14 facing the end plate 18. The supplying channel is used as the fuel supplying channel or the oxygen supplying channel according to the facing electrodes. For example, the supplying channel adjacent to the anode electrode 12b is used as the fuel supplying channel for supplying the hydrogen containing fuel, and the supplying channel adjacent to the cathode electrode 12c is used as the oxygen supplying channel for supplying oxygen.

In the stack 10 with the foregoing configuration, a fastening means (not shown) is provided for preventing the hydrogen containing fuel and air supplied to the electric generator 11 from leaking and for applying a predetermined pressure to assemble the plurality of unit cells forming the electric generator 11 into the fuel cell system 10.

For example, the fastening means includes a plurality of penetrating bars (not shown) penetrating a plurality of through holes (not shown) respectively formed in a circumferential edge of the end plate 18; and a plurality of nuts (not shown) coupled to threaded parts provided in opposite ends of the penetrating bar. Therefore, the nuts are coupled to the ends of the penetrating bars and that the penetrating bars penetrate the through holes, so that the electric generator 11 is maintained as being air-tightly pressed by the end plates 18.

The operation of the fuel cell system according to the embodiment of the present invention described above is as follows.

The hydrogen containing fuel is smoothly supplied from the fuel feeder 20 to the electric generator 11, in particular, to the anode electrode 12b of the membrane electrode assembly 12 via the fuel supplying channel A of the bipolar plate 14 in the stack 10. Furthermore, oxygen is smoothly supplied from the oxygen feeder 30 to the electric generator 11, in particular, to the cathode electrode 12c of the membrane electrode assembly 12 via the oxygen supplying channel B of the bipolar plate 14 in the stack 10.

Due to hydrogen oxidation in the anode electrode 12b, the hydrogen ions and carbon dioxide are produced. The hydrogen ions are transferred to the cathode electrode 12c through the electrolyte membrane 12a, and carbon dioxide is discharged to the outside through the fuel supplying channel A of the bipolar plate 14. Furthermore, water produced by oxygen reduction in the cathode electrode 12c is smoothly transferred from the cathode electrode 12c to the bipolar plate 14 and discharged to the outside through the oxygen supplying channel B. Also, the electrons generated in the anode electrode 12b are transferred to the cathode electrode 12c, thereby generating electricity. The electricity generated in the respective unit cells 11a through 11n is supplied to an external load through the output terminal provided in the end plates 18 via the bipolar plates 14 that are electrically connected to each other.

According to an embodiment of the present invention, the bipolar plate has one surface treated to have hydrophobicity and the other surface treated to have hydrophilicity, so that carbon dioxide and water produced by the chemical reaction in the unit cells are smoothly discharged to the outside, thereby enhancing the power generation efficiency of the unit cells. Furthermore, the power generation efficiency of the fuel cell system is enhanced.

Although exemplary embodiments of the present invention have been shown and described, it can be appreciated by those skilled in the art that modifications can be made to these embodiments without departing from the principles of the present invention, the scope of which is defined by the following claims.

## Claims

1. A unit cell (11a - n) comprising:
a membrane electrode assembly (12) including a polymer membrane (12a), and anode and cathode electrodes (12b, 12c) arranged on opposite sides of the polymer membrane; and
a bipolar plate (14) having first and second opposite surfaces (24, 22), each of the first and second opposite surfaces including a channel (A, B) for fluid flow, wherein the first surface (24) of the bipolar plate is arranged to face the anode electrode and the second surface (22) of the bipolar plate is arranged to face the cathode electrode;
wherein the first surface (24) facing the anode electrode has hydrophobicity for assisting in the transfer of fuel from the first surface to the anode electrode (12b) and the second surface facing the cathode electrode has hydrophilicity for assisting in the transfer of water from the cathode electrode (12c) to the second surface (22), the first surface (24) exhibiting a contact angle in the range of 60° to 135° and the second surface (22) exhibiting a contact angle of less than 60°.

2. A unit cell according to claim 1, wherein the first surface has a coating of a hydrophobic material, and the second surface has a coating of a hydrophilic material.

3. A unit cell according to claim 2, wherein the hydrophobic material comprises either a phenol or epoxy compound, and the hydrophilic material comprises an acrylic compound.

4. A unit cell according to any one of the preceding claims,
wherein the first and second opposite surfaces respectively have different contact angles between a liquid surface and a solid surface.

5. A unit cell according to any one of the preceding claims, wherein the fluid flow channels respectively comprise a fuel supplying channel adapted to supply a hydrogen containing fuel, and an oxygen supplying channel adapted to supply oxygen.

6. A unit cell according to any one of the preceding claims, wherein the first surface of the bipolar plate comprises a fuel supplying channel adapted to supply a hydrogen containing fuel to the anode electrode, and the second surface of the bipolar plate comprises an oxygen supplying channel adapted to supply oxygen to the cathode electrode.

7. A fuel cell system, comprising:
a stack (10) having an electric generator (11) adapted to generate electricity by a chemical reaction between hydrogen and oxygen;
a fuel feeder (20) adapted to supply the stack with a hydrogen containing fuel; and
an oxygen feeder (30) adapted to supply the stack with oxygen;
wherein the electric generator (11) includes a unit cell (11a - n) according to any one of the preceding claims.

## Patentansprüche

1. Eine Einheitszelle (11a-n), umfassend:
eine Membran-Elektroden-Anordnung (12), die eine Polymermembran (12a) und auf gegenüberliegenden Seiten der Polymermembran angeordnete Anoden- und Kathodenelektroden (12b, 12c) beinhaltet; und
eine Bipolarplatte (14) mit ersten und zweiten gegenüberliegenden Oberflächen (24, 22), wobei jede der ersten und zweiten gegenüberliegenden Oberflächen einen Kanal (A, B) für Fluidfluss beinhaltet, wobei die erste Oberfläche (24) der Bipolarplatte derart angeordnet ist, dass sie der Anodenelektrode zugewandt ist, und die zweite Oberfläche (22) der Bipolarplatte derart angeordnet ist, dass sie der Kathodenelektrode zugewandt ist;
wobei die der Anodenelektrode zugewandte erste Oberfläche (24) zur Unterstützung der Übertragung von Brennstoff von der ersten Oberfläche zu der Anodenelektrode (12b) Hydrophobizität aufweist und die der Kathodenelektrode zugewandte zweite Oberfläche zur Unterstützung der Übertragung von Wasser von der Kathodenelektrode (12c) zu der zweiten Oberfläche (22) Hydrophilizität aufweist, wobei die erste Oberfläche (24) einen Kontaktwinkel zwischen 60° und 135° aufweist und die zweite Oberfläche (22) einen Kontaktwinkel von weniger als 60° aufweist.

2. Eine Einheitszelle gemäß Anspruch 1, wobei die erste Oberfläche eine Beschichtung aus einem hydrophoben Material aufweist und die zweite Oberfläche eine Beschichtung aus einem hydrophilen Material aufweist.

3. Eine Einheitszelle gemäß Anspruch 2, wobei das hydrophobe Material entweder ein Phenol oder eine Epoxidverbindung umfasst und das hydrophile Material eine Acrylverbindung umfasst.

4. Eine Einheitszelle gemäß irgendeinem der vorhergehenden Ansprüche,
wobei die ersten und zweiten gegenüberliegenden Oberflächen jeweils verschiedene Kontaktwinkel zwischen einer Flüssigkeitsoberfläche und einer Festkörperoberfläche aufweisen.

5. Eine Einheitszelle gemäß irgendeinem der vorhergehenden Ansprüche, wobei die Fluidflusskanäle einen Brennstoffzufuhrkanal, der dazu ausgelegt ist, einen Wasserstoff enthaltenden Brennstoff zuzuführen, beziehungsweise einen Sauerstoffzuführkanal, der dazu ausgelegt ist, Sauerstoff zuzuführen, umfassen.

6. Eine Einheitszelle gemäß irgendeinem der vorhergehenden Ansprüche, wobei die erste Oberfläche der Bipolarplatte einen Brennstoffzufuhrkanal umfasst, der dazu ausgelegt ist, der Anodenelektrode einen Wasserstoff enthaltenden Brennstoff zuzuführen, und die zweite Oberfläche der Bipolarplatte einen Sauerstoffzufuhrkanal umfasst, der dazu ausgelegt ist, der Kathodenelektrode Sauerstoff zuzuführen.

7. Ein Brennstoffzellensystem, umfassend:
einen Stapel (10) mit einem elektrischen Generator (11), der dazu ausgelegt ist, durch eine chemische Reaktion zwischen Wasserstoff und Sauerstoff Elektrizität zu generieren;
einen Brennstoffeinspeiser (20), der dazu ausgelegt ist, dem Stapel einen Wasserstoff enthaltenden Brennstoff zuzuführen; und
einen Sauerstoffeinspeiser (30), der dazu ausgelegt ist, dem Stapel Sauerstoff zuzuführen;
wobei der elektrische Generator (11) eine Einheitszelle (11a- n) gemäß irgendeinem der vorhergehenden Ansprüche beinhaltet.

## Revendications

1. Cellule unitaire (11a-n) comprenant :
un ensemble (12) membrane-électrodes comportant une membrane polymère (12a), et des électrodes anodique et cathodique (12b, 12c) agencées sur des côtés opposés de la membrane polymère ; et
une plaque bipolaire (14) ayant des première et deuxième surfaces opposées (24, 22), chacune des première et deuxième surfaces opposées comportant un canal (A, B) destiné à un écoulement de fluide, où la première surface (24) de la plaque bipolaire est agencée pour se trouver en vis-à-vis de l'électrode anodique et la deuxième surface (22) de la plaque bipolaire est agencée pour se trouver en vis-à-vis de l'électrode cathodique ;
dans laquelle la première surface (24) en vis-à-vis de l'électrode anodique est hydrophobe afin d'aider au transfert de combustible de la première surface à l'électrode anodique (12b) et la deuxième surface en vis-à-vis de l'électrode cathodique est hydrophile afin d'aider au transfert d'eau de l'électrode cathodique (12c) à la deuxième surface (22), la première surface (24) présentant un angle de contact dans la plage de 60° à 135° et la deuxième surface (22) présentant un angle de contact de moins de 60°.

2. Cellule unitaire selon la revendication 1, dans laquelle la première surface possède un revêtement d'un matériau hydrophobe, et la deuxième surface possède un revêtement d'un matériau hydrophile.

3. Cellule unitaire selon la revendication 2, dans laquelle le matériau hydrophobe comprend l'un ou l'autre d'un composant de phénol ou d'époxy, et le matériau hydrophile comprend un composant acrylique.

4. Cellule unitaire selon l'une quelconque des revendications précédentes,
dans laquelle les première .et deuxième surfaces opposées ont respectivement différents angles de contact entre une surface liquide et une surface solide.

5. Cellule unitaire selon l'une quelconque des revendications précédentes, dans laquelle les canaux d'écoulement de fluide comprennent respectivement un canal d'alimentation de combustible conçu pour alimenter en combustible contenant de l'hydrogène, et un canal d'alimentation d'oxygène conçu pour alimenter en oxygène.

6. Cellule unitaire selon l'une quelconque des revendications précédentes, dans laquelle la première surface de la plaque bipolaire comprend un canal d'alimentation de combustible conçu pour alimenter en combustible contenant de l'hydrogène l'électrode anodique, et la deuxième surface de la plaque bipolaire comprend un canal d'alimentation d'oxygène conçu pour alimenter en oxygène l'électrode cathodique.

7. Système de pile à combustible, comprenant :
un empilement (10) ayant un générateur électrique (11) conçu pour générer de l'électricité par le biais d'une réaction chimique entre de l'hydrogène et de l'oxygène ;
un distributeur de combustible (20) conçu pour alimenter en combustible contenant de l'hydrogène l'empilement ; et
un distributeur d'oxygène (30) conçu pour alimenter en oxygène l'empilement ;
dans lequel le générateur électrique (11) comporte une cellule unitaire (11a-n) selon l'une quelconque des revendications précédentes.
